# EUROPEAN PATENT APPLICATION

(11) **EP 2 071 840 A1**
(43) Date of publication of application: **17.06.2009**
(21) Application number: 08161028.9
(22) Date of filing: 23.07.2008
(51) Int. Cl.: H04N 7/16, H04N 5/445

(54) **Method for providing graphical user interface and broadcast receiving apparatus applying the same**

(30) Priority: 13.12.2007 KR 20070130072
(71) Applicant: Samsung Electronics Co., Ltd., Seoul 442-742 (KR)
(72) Inventor: Hwang, Woo-seok, Seocho-gu Seoul (KR); Kwon, Heui-jin, Seongnam-si Gyeonggi-do (KR); Lee, Jeong-yeon, Bundang-gu Seongnam-si Gyeonggi-do (KR)
(74) Representative: Robinson, Ian Michael

(57) **Abstract**

A method for providing a graphical user interface (GUI) and a broadcast receiving apparatus applying the same are provided. According to the method for providing a GUI in the broadcast receiving apparatus, a list of pieces of item information pertaining to an item selected from among a plurality of items is displayed, wherein the pieces of item information may be acquired through a network. Therefore, if a user selects a specific item, it is possible to automatically provide the user with a list of item information which pertains to the selected item and which may be acquired through a network.

## Description

### CROSS-REFERENCE TO RELATED APPLICATIONS

This application claims priority from Korean Patent Application No. 10-2007-0130072, filed on December 13, 2007 in the Korean Intellectual Property Office, the disclosure of which is incorporated herein by reference in its entirety.

### BACKGROUND OF THE INVENTION

### 1. Field of the Invention

Apparatuses and methods consistent with the present invention relate to providing a graphical user interface (GUI), and more particularly, to providing a GUI through which a user may input commands to operate a broadcast receiving apparatus or may acquire useful information.

### 2. Description of the Related Art

Internet protocol televisions (IP-TVs) capable of accessing the Internet and performing networking functions provide users not only with broadcasts received from broadcast stations but also with information acquired from the Internet.

Since a wide variety of information may be obtained via the Internet and this information is susceptible to change at any moment, graphical user interfaces (GUIs) used by users who desire to obtain information which IP-TVs acquire via the Internet, have become complicated.

However, the increasing complexity of GUIs goes against the current trend for simple GUIs, and it may be difficult for users to search for desired information using such complicated GUIs.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a method for providing a GUI, and a broadcast receiving apparatus applying the method, which automatically provides a user with a list of item information that can be acquired through a network, pertaining to items displayed on a screen, so that the user can select desired information more easily, more conveniently and more intuitively.

According to an aspect of the present invention, there is provided a method for providing a GUI in a broadcast receiving apparatus which provides a user with a received broadcast, the method comprising displaying a plurality of items; and displaying a list of pieces of item information pertaining to an item selected from among the plurality of items. The pieces of item information may be acquired through a network.

Each of the pieces of item information may be selected by the user.

The pieces of item information may comprise pieces of real-time variable information, and the list may comprise visual representations of each of the pieces of item information displayed.

The network may comprise the Internet, and the pieces of item information may be updated in real time.

The visual representations of each of the pieces of item information may be linked to uniform resource locators (URLs) in which the pieces of item information are located.

The list may be displayed adjacent to the selected item.

A position in which the list is displayed may be selected by the user.

The selected item may be one of an item highlighted by the user, an item selected after a predetermined period of time has elapsed after being highlighted by the user, and an item selected by input of a specific key after being highlighted by the user.

The plurality of items may be selected by the user while the list is being displayed.

The pieces of item information may be acquired through a network. The method may further comprise changing a display status of the list, if the user inputs a specific command or if a connection state between the network and the broadcast receiving apparatus falls below a certain level.

The changing the display status may comprise deleting the list.

The method may further comprise displaying content to which a piece of item information selected from among the pieces of item information arranged in the list pertains.

According to another aspect of the present invention, there is provided a broadcast receiving apparatus comprising a broadcast receiver which receives a broadcast; an output unit through which the broadcast received by the broadcast receiver is output; a GUI generator which generates a GUI to be displayed on the output unit; and a controller which controls the GUI generator so that a list of pieces of item information pertaining to an item selected from among a plurality of items displayed on the output unit is displayed as a GUI on the output unit. The pieces of item information may be acquired through a network.

Each of the pieces of item information may be selected by the user.

The pieces of item information may comprise pieces of real-time variable information, and the list may comprise visual representations of each of the pieces of item information displayed.

The network may comprise the Internet, and the pieces of item information may be updated in real time.

The visual representations of each of the pieces of item information may be linked to URLs in which the pieces of item information are located.

The list may be displayed adjacent to the selected item.

### BRIEF DESCRIPTION OF THE DRAWINGS

The above aspects and other aspects of the present invention will become apparent and more readily appreciated from the following description of the exemplary embodiments, taken in conjunction with the accompany drawings, in which:
FIG. 1 is a block diagram of an IP-TV according to an exemplary embodiment of the present invention;
FIG. 2 is a flowchart explaining a method for providing a GUI, according to an exemplary embodiment of the present invention; and
FIGS. 3A to 3C, 4 and 5 are views explaining in detail the method for providing a GUI exemplarily shown in FIG. 2.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

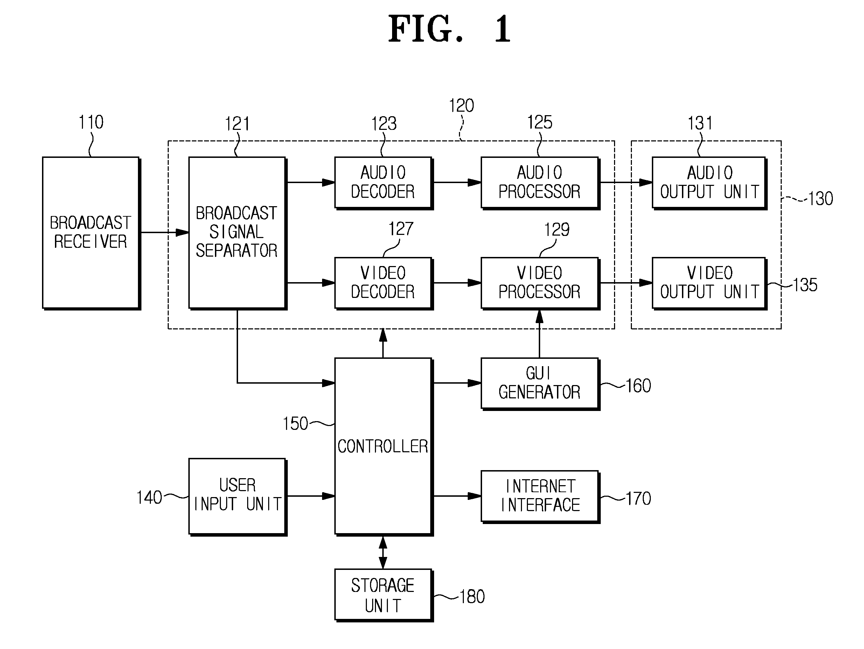

FIG. 1 is a block diagram of an IP-TV according to an exemplary embodiment of the present invention. The IP-TV of FIG. 1 is used as a broadcast receiving apparatus which receives broadcast programs and provides a user with the received broadcast programs.

Additionally, the IP-TV of FIG. 1 is connected to the Internet so that the IP-TV is able to acquire a variety of information from the Internet and provide the user with the acquired information. In order to achieve this, the IP-TV provides the user with a GUI through which the user may select desired information from the information acquired from the Internet.

The IP-TV of FIG. 1 comprises a broadcast receiver 110, a broadcast processor 120, a broadcast output unit 130, a user input unit 140, a controller 150, a GUI generator 160, an Internet interface 170 and a storage unit 180.

The broadcast receiver 110 tunes to a broadcast received wirelessly or by wire through radio waves or a cable, and demodulates the received broadcast.

The broadcast processor 120 performs signal processing with respect to the broadcast signal output from the broadcast signal receiver 110. The broadcast processor 120 functioning as described above comprises a broadcast signal separator 121, an audio decoder 123, an audio processor 125, a video decoder 127 and a video processor 129.

The broadcast signal separator 121 separates the broadcast signal output from the broadcast signal receiver 110 into a video signal, an audio signal and additional data, and outputs the video and audio signals and the additional data. The audio signal and the video signal separated from the broadcast signal are transferred to the audio decoder 123 and the video decoder 127, respectively, in order to provide a digital broadcast program to a user. The additional data separated from the broadcast signal is transferred to the controller 150. The additional data may be program and system information protocol (PSIP) information.

The audio decoder 123 decodes the audio signal output from the broadcast signal separator 121 and outputs the decompressed audio signal.

The audio processor 125 converts the decoded audio signal output from the audio decoder 123 into an audio signal of a format suitable for playback through a speaker included in the IP-TV.

The video decoder 127 decodes the video signal output from the broadcast signal separator 121, so that the decompressed video signal can be output.

The video processor 129 converts the decoded video signal output from the video decoder 127 into a video signal of a format suitable for display on a display of the IP-TV. In order to achieve a format suitable for display, the video processor 129 performs color signal processing and scaling with respect to the decoded video signal.

The GUI generator 160 generates a GUI to be displayed on the display under control of the controller 150. The GUI generated by the GUI generator 160 may be a GUI through which a user may input user commands to activate functions of the IP-TV, a GUI providing information on the operating state of the IP-TV, or a GUI which enables a user to select desired information from a range of information which the IP-TV acquires from the Internet.

The GUI generated by the GUI generator 160 is transferred to the video processor 129, and is then added to video to be displayed on the display.

The broadcast output unit 130 outputs video and audio corresponding to the video signal and the audio signal output from the broadcast processor 120, and provides a user with the video and audio. The broadcast output unit 130 comprises an audio output unit 131 and a video output unit 135.

The audio output unit 131 outputs the audio signal transmitted from the audio processor 125 through the speaker. The video output unit 135 outputs the video signal transmitted from the video processor 129 on the display.

The Internet interface 170 is communicably connected to the Internet. The storage unit 180 is a storage medium which stores information required for the controller 150 to perform functions of the IP-TV. The required information comprises information acquired from the Internet.

The user input unit 140 transfers user commands received via a remote controller or operating buttons on the IP-TV to the controller 150.

The controller 150 controls the entire operation of the IP-TV in response to the user commands received from the user input unit 140. Specifically, the controller 150 controls the broadcast receiver 110, broadcast processor 120 and broadcast output unit 130 so that a broadcast program selected by the user may be received and output.

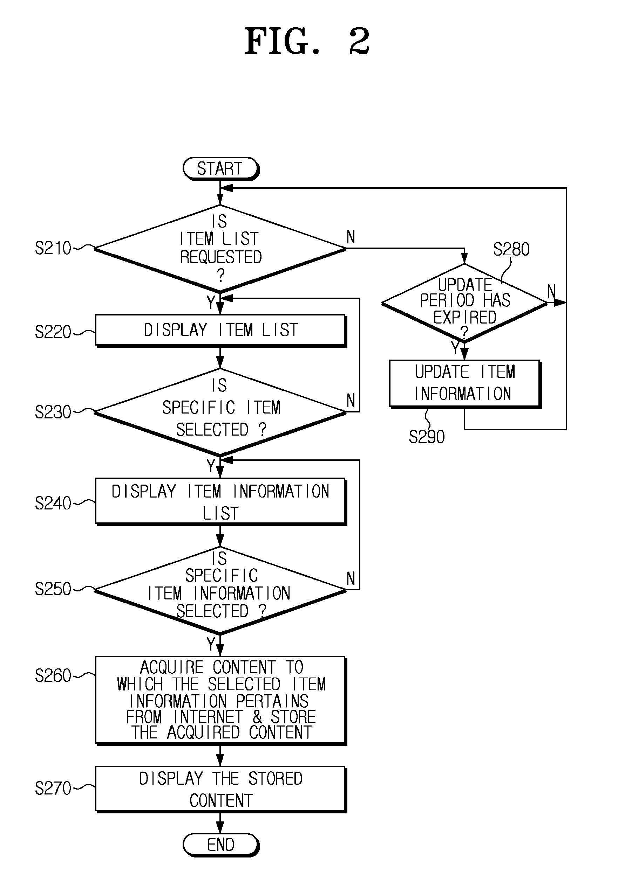

Additionally, the controller 150 is connected to the Internet via the Internet interface 170, so it is possible to acquire a variety of information from the Internet and provide a user with the acquired information. In more detail, the controller 150 controls the GUI generator 160 to generate a GUI through which a user may select desired information from information that can be acquired from the Internet and to provide the user with the generated GUI on the display. Hereinafter, this process by which the IP-TV provides a GUI on the display will be described in detail with reference to FIG. 2.

FIG. 2 is a flowchart explaining a method for providing a GUI, according to an exemplary embodiment of the present invention.

In FIG. 2, if a user requests an item list (operation S210-Y), the controller 150 may control the GUI generator 160 to display the item list on the display (operation S220).

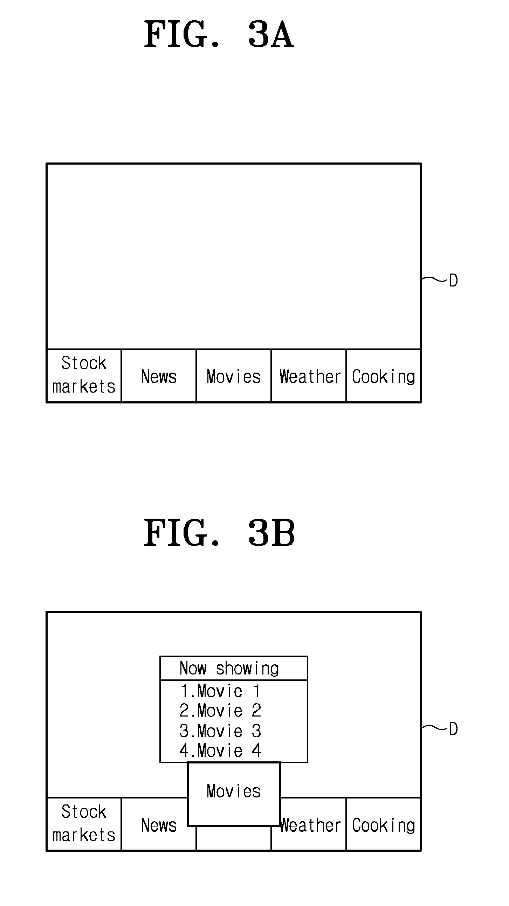

Here, "item" refers to a category of information which the IP-TV is able to acquire from the Internet. FIG. 3A shows a display D on which an item list is displayed as a GUI. In the exemplary embodiment of the present invention, items include stock reports, news, movie information, weather reports and cooking recipes, and the item list containing the items is displayed on the bottom of the display D of FIG. 3A.

During operation S210, the user may request the item list by manipulating keys of the remote controller. The user may then select one from among the items of the item list displayed in operation S220. Specifically, the user may move a highlight to a desired item using left and right directional keys of the remote controller, to select the desired item.

If the user selects a specific item (operation S230-Y), the controller 150 may control the GUI generator 160 to display an item information list on the display D (operation S240).

The item information list refers to a list of item information pertaining to the item selected by the user, and more particularly, names indicating the item information are listed in the item information list.

To perform operation S240, item information lists may be stored in the storage unit 180 according to the items listed. Additionally, the names indicating the item information stored in the storage unit 180 may be updated in real time by the controller 150.

FIG. 3B shows the display D on which a movie information list is displayed when the user selects "Movie" from the item list.

The user may select one from among the names indicating the item information, such as "Movie 1", "Movie 2", "Movie 3" and "Movie 4", from the item information list displayed as a result of operation S240. Specifically, the user may move a highlight to a desired item name using up and down directional keys of the remote controller, to select the desired item name.

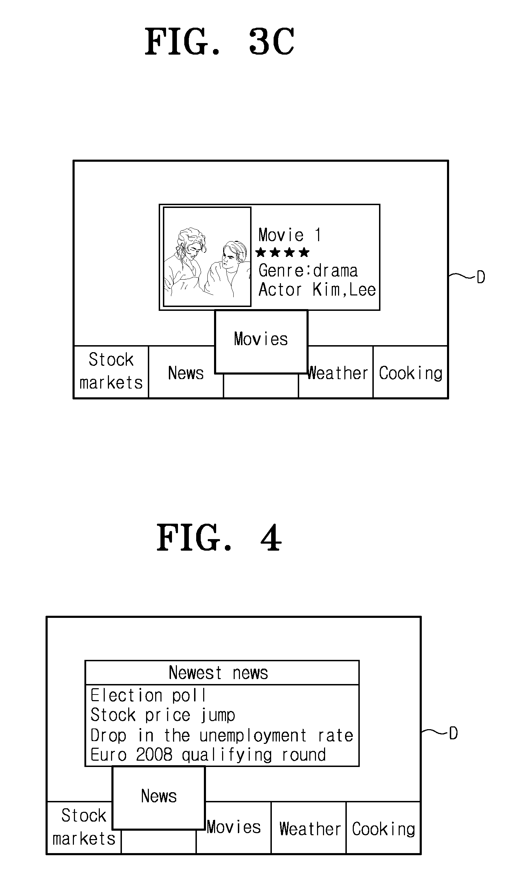

FIG. 4 shows the display D on which a news information list is displayed when the user selects "News" from the item list.

If the user selects specific item information from the item information list (operation S250-Y), the controller 150 may acquire content to which the selected information pertains from the Internet via the Internet interface 170, and may store the acquired content in the storage unit 180 (operation S260).

Additionally, the controller 150 may control the GUI generator 160, so that the item information list displayed as a result of operation S240 may disappear from the display D and instead the content to which the item information pertains and which is stored in the storage unit 180 may be displayed on the display D (operation S270).

To perform operation S260, uniform resource locators (URLs), in which a plurality of pieces of content to which item information pertains are each located, are stored in the storage unit 180. In other words, each of the names indicating the item information of the item information list displayed as a result of operation S240 may be linked to the respective URLs in which the plurality of pieces of content are located.

FIG. 3C shows the display D on which detailed information regarding "Movie 1" (for example, information regarding an evaluation score, genre, actors) is displayed as content to which item information pertains, when the user selects "Movie 1" from among the names of the movie information list shown in FIG. 3B.

If an item list is not requested (operation S210-N) and it is determined that an update period has expired (operation S280-Y), the controller 150 may update the item information pertaining to the items of the item list (operation S290). Accordingly, it is possible to periodically update the names indicating the item information stored in the storage unit 180 according to the items, together with the URLs in which the plurality of pieces of content to which the item information pertains is located.

The update period may be set if needed, for example, to approximately 10 minutes.

The method for providing a GUI has been described in detail above, in accordance with the exemplary embodiment of the present invention. According to the method, when the user selects a specific item, a list of item information pertaining to the selected item may be automatically provided to the user, so the user can more easily search for desired information via the Internet from among a variety of item information which continues to be updated.

Although the item information is periodically updated in the exemplary embodiment of the present invention, the item information may be real-time variable information. Accordingly, it is not necessary to periodically update the item information.

Additionally, the item information is acquired from the Internet in the exemplary embodiment of the present invention, but the present invention is also applicable to a situation in which the item information is acquired from networks other than the Internet.

Furthermore, in order to facilitate understanding of the present invention, the item information list associated with the selected item is displayed above the selected item, as shown in FIGS. 3B and 4 in the exemplary embodiment of the present invention. However, the position in which the item information list is displayed is not limited thereto and the item information list may be displayed adjacent to the selected item or displayed on any area of the display.

Moreover, the position in which the item information list is displayed may be selected by the user.

Although the user selects a desired item from among the items of the item list by highlighting the desired item in the exemplary embodiment of the present invention, the user may select the desired item after a predetermined period of time has elapsed after highlighting the item, or may select the desired item by inputting a specific key after highlighting the item.

Additionally, only a single item is selected by the user at once in the exemplary embodiment of the present invention, but the present invention is also applicable to a situation in which two or more items are selected by the user at once. In this situation, two or more item information lists may also be displayed on the display simultaneously.

Furthermore, the names indicating the item information are listed in the item information list in the exemplary embodiment of the present invention, but it is also possible to make an item information list in which visual representations other than the names indicating the item information, for example icons, may be displayed.

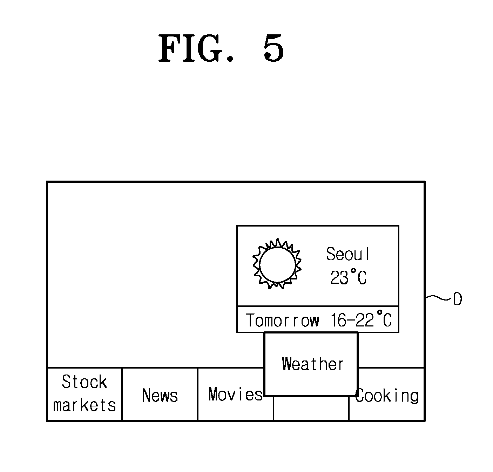

In the exemplary embodiment of the present invention, if an item is selected from the item list, a list of item information pertaining to the selected item is displayed. However, if a single piece of item information pertaining to the selected item exists, content to which the item information pertains may be directly displayed. This situation is exemplarily described with reference to FIG. 5. As shown in FIG. 5, content to which weather information pertains may be directly displayed on the display D when the user selects "Weather" from the item list.

The item information for providing a GUI refers to information acquired from the Internet, so if the connection status between the IP-TV and the Internet is unstable, that is, if the connection status falls below a certain level, the item information list may disappear from the display D. Additionally, if the user inputs a list delete command, the item information list may also disappear from the display D.

The IP-TV is used as an example of a broadcast receiving apparatus to which the present invention is applicable, but the present invention is also applicable to broadcast receiving apparatuses other than IP-TV.

As described above, according to the exemplary embodiment of the present invention, if the user selects a specific item, it is possible to automatically provide the user with a list of acquirable item information pertaining to the selected item over a network. Additionally, the user can more easily and more conveniently search for desired information via the Internet from among a variety of item information which continues to be updated, thereby increasing user convenience.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a graphical user interface in a broadcast receiving apparatus (110-180) which outputs a received broadcast, the method comprising:
displaying a plurality of items; and
displaying a list of pieces of item information pertaining to an item selected from among the plurality of items,
wherein the pieces of item information are acquirable through a network.

2. The method as claimed in claim 1 or 2, wherein each of the pieces of item information is selectable by a user.

3. The method as claimed in any of claims 1 to 3, wherein the pieces of item information comprise pieces of real-time variable information, and
the list comprises visual representations of each of the pieces of item information displayed.

4. The method as claimed in claim 3, wherein the network comprises the Internet, and the pieces of item information are updated in real time.

5. The method as claimed in claim 4, wherein the visual representations of each of the pieces of item information are linked to uniform resource locators in which the pieces of item information are located.

6. The method as claimed in any of claims 1 to 5, wherein the list is displayed adjacent to the item which is selected.

7. The method as claimed in claim 6, wherein a position in which the list is displayed is selected by a user.

8. The method as claimed in any of claims 1 to 7, wherein the item which is selected is one of an item highlighted by the user, an item selected after a predetermined period of time has elapsed after being highlighted by the user, and an item selected by input of a specific key after being highlighted by the user.

9. The method as claimed in any of claims 1 to 8, wherein the plurality of items are selected by the user while the list is being displayed.

10. The method as claimed in any of claims 1 to 9, wherein the pieces of item information are acquirable through a network,
the method further comprising changing a display status of the list, if a specific command is input or if a connection state between the network and the broadcast receiving apparatus falls below a certain level.

11. The method as claimed in claim 10, wherein the changing the display status comprises deleting the list.

12. The method as claimed in any of claims 1 to 11, further comprising displaying content to which a piece of item information selected from among the pieces of item information arranged in the list pertains.

13. A broadcast receiving apparatus comprising:
a broadcast receiver (110) which receives a broadcast;
an output unit (130) through which the broadcast received by the broadcast receiver (110) is output;
a graphical user interface generator (160) which generates a GUI to be displayed on the output unit (130); and
a controller (150) which controls the GUI generator (160) so that a list of pieces of item information pertaining to an item selected from among a plurality of items displayed on the output unit is displayed as a GUI on the output unit (130),
wherein the pieces of item information are acquirable through a network.

14. The broadcast receiving apparatus as claimed in claim 13, wherein each of the pieces of item information selectable by a user.

15. The broadcast receiving apparatus as claimed in claim 13 or 14, wherein the pieces of item information comprise pieces of real-time variable information, and
the list comprises visual representations of each of the pieces of item information displayed.
